# EUROPEAN PATENT APPLICATION

(11) **EP 3 035 641 A1**
(43) Date of publication of application: **22.06.2016**
(21) Application number: 14794751.9
(22) Date of filing: 30.05.2014
(51) Int. Cl.: H04L 29/08

(54) **METHOD FOR FILE UPLOAD TO CLOUD STORAGE SYSTEM, DOWNLOAD METHOD AND DEVICE**

(30) Priority: 18.09.2013 CN 201310430510
(71) Applicant: ZTE Corporation, Shenzhen, Guangdong 518057 (CN)
(72) Inventor: ZHOU, Sujing, Shenzhen Guangdong 518057 (CN); CHEN, Xiaohua, Shenzhen Guangdong 518057 (CN)
(74) Representative: Modiano, Gabriella Diana
(86) International application number: PCT/CN2014/078943
(87) International publication number: WO 2014/180416

(57) **Abstract**

Disclosed are a method for uploading files to a cloud storage system, a downloading method and a device, wherein the method for uploading files to cloud storage system is applied to a client end, including: generating a file key; performing a security processing on an original data file according to the file key and generating a secure data file; sending the secure data file to a cloud storage system. The abovementioned technical solution provides an end-to-end confidentiality and integrity protection for data stored by a user in a cloud storage system, thus solving the problem that the data storage security in the cloud storage system is relatively poor.

## Description

### Technical Field

The present invention relates to the technical field of uploading files to a cloud storage system, and more particularly, to a method for uploading files to a cloud storage system, a downloading method and device.

### Background of the Related Art

With the rapid development of cloud storage, more and more people or services start choosing to use the cloud storage environment for storing their data, cloud storage users can upload their files to the cloud storage environment for the cloud storage service provider to carry out the file management, and designate access rights to other users for accessing the files, thus achieving the file sharing.

However, the cloud storage environment makes the data owners lose complete control of the data, which makes the data security face a series of threats, such as: DOS attacks using large-scale botnets, attacks exploiting vulnerabilities of operating systems or application service protocols, as well as malicious attacks, theft and illegal misuse target the user privacy information stored in the "cloud", etc., and there are various means for that. In addition, various systems and applications residing in the "cloud" still have to face threats such as viruses, Trojans and other malicious software tools which are faced in the traditional stand-alone machine or intra-net environment. If sensitive data (including: financial documents, personal medical records) are stored in a cloud storage environment controlled by others, the above mentioned problems will become more serious with the number of users who share the storage increasing. Therefore, systems based on cloud storage services have very urgent needs for security mechanisms.

### Summary of the Invention

To solve the technical problem, the embodiment of the present invention is to provide a method for uploading files to a cloud storage system, a downloading method and device, to solve the problem in the related art that data storage security in a cloud storage system is relatively poor.

To solve the abovementioned technical problem, the following technical solution is used:
a method for uploading files to a cloud storage system, applied to a client end, and comprising:
   generating a file key;
   performing a security processing on an original data file according to the file key and generating a secure data file;
   sending the secure data file to a cloud storage system.
   Alternatively, the step of generating a file key comprises:
      generating the file key based on a pre-generated user key and file information.

Alternatively, the file information comprises: a file name, a file identifier and a last modification time extracted from the original data file.

Alternatively, the step of performing a security processing on an original data file according to the file key and generating a secure data file comprises:
encrypting part or all of content of the original data file, and/or performing an integrity protection processing on the original data file.

Alternatively, an encryption key used for encrypting part or all of the content of the original data file is: the file key or a first derived key derived based on the file key;
a key used for performing an integrity protection processing on the original data file is: the file key, or a second derived key derived based on the file key.

Alternatively, it further comprises:
sending information for generating the file key, except of the user key, to the cloud storage system.

A method for downloading files from a cloud storage system, comprising:
receiving a secure data file sent by a cloud storage system based on a downloading request;
generating a file key;
performing a security analysis processing on the secure data file based on the file key.

Alternatively, it further comprises:
receiving related file information sent by the cloud storage system based on the downloading request.

Alternatively, the related file information comprises: a secure metadata file.

Alternatively, the secure metadata file comprises one or more of a file identifier, a file owner identifier, a file name, a last modification time, a security processing time, random information, a security parameter and an access control list.

Alternatively, the step of performing a security analysis processing on the secure data file based on the file key comprises:
decrypting some or all of content of the secure data file, and/or performing an integrity protection verification processing on the secure data file.

A device for uploading files to a cloud storage system, applied to a client end, and comprising a first generating module, a first processing module and an uploading module, wherein:
the first generating module is configured to: generate a file key;
the first processing module is configured to: perform a security processing on an original data file based on the file key and generate a secure data file;
the uploading module is configured to: send the secure data file to a cloud storage system.

A device for downloading files from a cloud storage system, comprising a downloading module, a second generating module and a second processing module, wherein:
the downloading module is configured to: receive a secure data file sent by a cloud storage system based on a downloading request;
the second generating module is configured to: generate a file key;
the second processing module is configured to: perform a security analysis processing on the secure data file based on the file key.

The beneficial effects of the abovementioned technical solution are as follows:
With the method for uploading files to cloud storage system in accordance with the embodiment of the present invention, when a user uploads a data file at the client end, firstly a file key is generated, and then a security processing is performed on the original data file based on the file key and a secure data file is generated, and then the secure data file is sent to the cloud storage system for storage. It provides an end-to-end confidentiality and integrity protection for data stored by the user in the cloud storage and solves the problem in the related art that the data storage security in the cloud storage system is relatively poor.

### Brief Description of the Drawings

FIG. 1 is a flow chart of a method for uploading files to a cloud storage system in accordance with an embodiment of the present invention;
FIG. 2 is a flow chart of a method for downloading files from a cloud storage system in accordance with an embodiment of the present invention;
FIG. 3 is a block diagram of a secure metadata file in accordance with an embodiment of the present invention;
FIG. 4 is a block diagram of a device for uploading files to a cloud storage system in accordance with an embodiment of the present invention;
FIG. 5 is a block diagram of a device for downloading files from a cloud storage in accordance with an embodiment of the present invention.

### Preferred Embodiments of the Invention

Hereinafter, in conjunction with the accompanying drawings and specific embodiments, the present invention will be described in detail.

The method for uploading files to a cloud storage system in accordance with an embodiment of the present invention provides an end-to-end confidentiality and integrity protection for data stored by a user in the cloud storage and solves the problem in the related art that the data storage security in the cloud storage system is relatively poor.

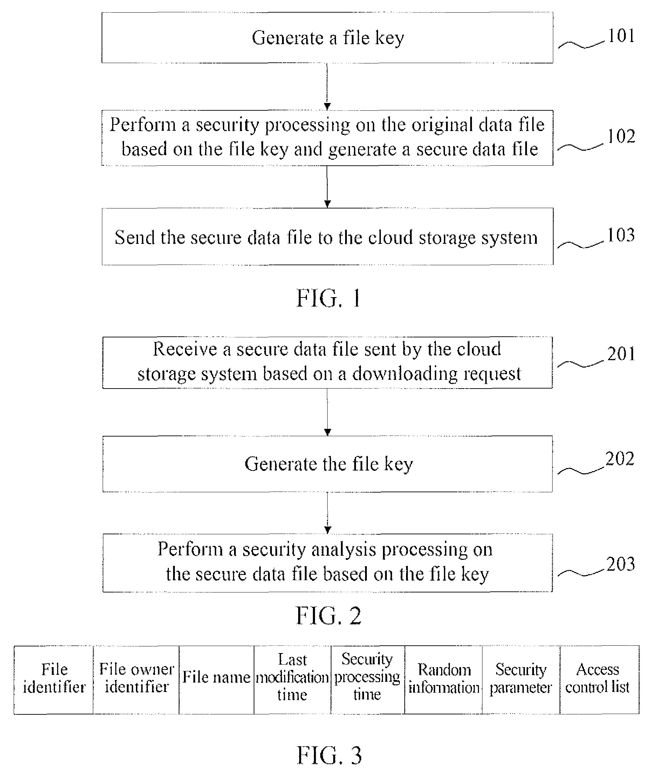

As shown in FIG. 1, the method for uploading files to a cloud storage system in accordance with an embodiment of the present invention is applied to the client end and comprises:
in step 101, it is to generate a file key;
in step 102, it is to perform a security processing on the original data file based on the file key and generate a secure data file;
in step 103, it is to send the secure data file to the cloud storage system.

In the method for uploading files to the cloud storage system in accordance with the embodiment of the present invention, firstly, when the user uploads a data file at the client end, firstly a file key is generated, and then a security processing is performed on the original data file based on the file key and a secure data file is generated, and then the secure data file is sent to the cloud storage system for storage. It provides an end-to-end confidentiality and integrity protection for data stored by the user in the cloud storage and solves the problem in the related art that the data storage security in the cloud storage system is relatively poor.

In the abovementioned step 101, the file key is generated based on a pre-generated user key and at least file information, the following specific embodiments are used for illustration rather than limitation:
in a specific embodiment, the file key is generated based on the user key, the file information, and user information such as the user name, the user identifier and the current time obtained by the client end;
in a specific embodiment, the file key is generated based on the user key, the file information, as well as the user information such as the user name and the user identifier obtained by the client end, and the random information generated by the client end itself.

Wherein, the file information includes but is not limited to: a file name, a file identifier, and optionally, a last modification time extracted from the original data file.

In a specific embodiment of the present invention, the user information may be a user name, a user identifier, and so on, which are not enumerated herein. Wherein, the information input by the user can be password information.

In the abovementioned step 102, the step of performing a security processing on the original data file based on the file key and generating a secure data file comprises:
encrypting part or all of the content of the original data file, and/or performing an integrity protection processing on the original data file.

Specifically, the encryption key used for encrypting part or all of the content of the original data file is: the file key or a first derived key derived based on the file key; the key used for performing an integrity protection processing on the original data file is: the file key, or a second derived key derived based on the file key.

The method for uploading files to the cloud storage system in accordance with an embodiment of the present invention may further comprise:
sending information for generating the file key, except of the user key, to the cloud storage system.

In the following, the specific embodiment of the present invention will be described as follows:
when the user uploads files to the cloud storage system at the client end, first, a file key is generated based on the user key pre-generated by the client end and the file information extracted from the original data file; wherein, the file information, as well as the user information, the current time, and the random information used when generating the file key, can be all saved and transferred in the form of files;

then part or all of the content of the original data file is encrypted based on the file key, and/or integrity protection processing is performed; keys used in the encryption and integrity protection may be different; the processing order of the encryption and the integrity protection is not restricted, the encryption may be performed first, and then integrity protection is performed on the cipher text; or integrity protection is performed on the original data file first, and then encryption is performed.

Finally, the secure data file and the information for generating the file key, except of the user key, are sent to the cloud storage system to improve the data storage security.

As shown in FIG. 2, the embodiment of the present invention further provides a method for downloading files from the cloud storage system, comprising:
in step 201, it is to receive a secure data file sent by the cloud storage system based on a downloading request;
in step 202, it is to generate a file key;
in step 203, it is to perform a security analysis processing on the secure data file based on the file key.

In the method for downloading files from the cloud storage system in accordance with an embodiment of the present invention, when the user downloads files from the cloud storage system, firstly the secure data file sent by the cloud storage system according to the downloading request is received, and then a file key is generated, a security analysis processing is performed on the secure data file according to the file key, so as to solve the problem that the data storage security in the cloud storage system is relatively poor.

The method for downloading files from the cloud storage system in accordance with an embodiment of the present invention further comprises:
receiving related file information sent by the cloud storage system based on the downloading request.

Wherein the related file information comprises: a secure metadata file. Specifically, the secure metadata file may comprise one or more of a file identifier, a file owner identifier, a file name, a last modification time, a security processing time, random information, a security parameter and an access control list. As the specific embodiment shown in FIG. 3, the secure metadata file comprises a file identifier, a file owner identifier, a file name, a last modification time, a security processing time, random information, a security parameter and an access control list, but what is shown in FIG. 3 is only an example of the secure metadata file, the content and format of the secure metadata file are not limited to the content and format shown in FIG. 3, for example, the secure metadata file may also comprise: the file name, the file identifier, the file owner identifier, the last modification time, the security processing time, the random information, the security parameter and the access control list; the secure metadata file may further comprise other content.

In specific embodiments of the present invention, the information contained in the secure metadata file can be used to generate the file key. Wherein, the security processing time is the current time for generating a file key based on the original data file and performing a security processing. Wherein, the security parameter is a public parameter that needs to be used in the security processing and security analysis processing. Specifically, the security parameter can be a parameter of the cryptosystem based on the Discrete Logarithm Problem, including but not limited to the discrete logarithm problem in the Finite field and the discrete logarithm problem on Elliptic Curve. Wherein, the random information is used for increasing the randomness of the generated file key.

In a specific embodiment, the security parameter comprise the group order p and the group generator g, the random information is gy, where y is a random number from 1 to p-1, the user key is x, where x is the output of the one-way function KDF after inputting information such as FileInfo, UserInfo, TimeInfo, Secret, wherein, the FileInfo comprises file information such as the file name, the file identifier and/or the last modification time, the UserInfo is the user information, the TimeInfo is the current time, the Secret is the user key, and the KDF is the hash function (such as SHA2) in the cryptographic security or the key derivation function, and the generated file key is gyx.

In a specific embodiment of the present invention, the access control list is used to record the access permission of the original data file, it may comprise a user name and an ACL entry that are used to identify a user having the access permission. Wherein, the ACL entry comprises a protection-processed file key, the protection processing may be encrypting the file key or a way described in the following specific embodiment:
assuming that the user IDz is a user having a file access permission recorded in the access control list, the file key of the secure data file is the abovementioned gyx, the ACL entry is (gz) yx, where the gz is the public key of the corresponding user IDz, and the z is the private key of the corresponding user IDz, then after the user receives a secure metadata file that contains the ACL entry, the user can recover the file key gyx based on the private key z, then perform a security analysis processing on the received secure data file based on the file key.

In the abovementioned step 202, the step of generating a file key is specifically:
generating the file key based on the pre-generated user key and at least the file information; for example, generating the file key based on the pre-generated user key and the file information, as well as the obtained user information, the current time, and the random information generated by the client end itself.

In the abovementioned step 203, the step of performing a security analysis processing on the secure data file based on the file key comprises:
decrypting some or all of the content of the secure data file, and/or performing an integrity protection verification processing on the secure data file. Wherein, the key used for decrypting part or all the content of the secure data file and the key used for performing the integrity protection check processing on the secure data file may be different keys.

The method for downloading files from the cloud storage system in accordance with the embodiment of the present invention provides users with an end-to-end confidentiality and integrity protection and solves the problem in the related art that the data storage security in the cloud storage system is relatively poor.

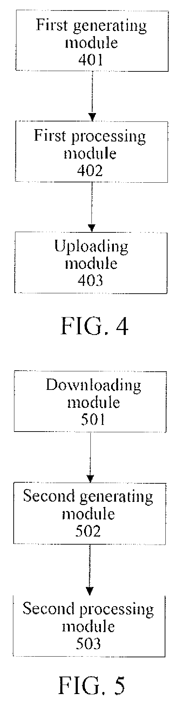

As shown in FIG. 4, the embodiment of the present invention further provides a device for uploading files to a cloud storage system, applied to a client end, and comprising:
A first generating module 401, configured to generate a file key;
A first processing module 402, configured to perform a security processing on an original data file based on the file key and generate a secure data file;
An uploading module 403, configured to send the secure data file to the cloud storage system.

Wherein, in this embodiment, the abovementioned first generating module 401 may be configured to: generate the file key based on the pre-generated user key and at least the file information; for example, generate the file key based on the pre-generated user key and file information, as well as the obtained user information, the current time, and the random information generated by the client end itself.

Wherein, the file information includes but is not limited to: the file name and the file identifier, extracted from the original data file, and optionally, a last modification time.

Alternatively, the first processing module 402 is configured to: encrypt part or all of the content of the original data file, and/or perform an integrity protection processing on the original data file.

Wherein, the encryption key used for encrypting part or all of the content of the original data file is: the file key or a first derived key derived based on the file key; the key used for performing an integrity protection processing on the original data file is: the file key or a second derived key derived based on the file key. Wherein, the first derived key and the second derived key may be different keys.

In the device for uploading files to the cloud storage system in accordance with the embodiment of the present invention, the uploading module can also be configured to: further send information used to generate the key file, except of the user key, to the cloud storage system.

The device for uploading files to the cloud storage system in accordance with the embodiment of the present invention is a device corresponding to the abovementioned method for uploading files to the cloud storage system, all implementations in the abovementioned method are applicable to the device embodiments to similarly achieve: providing users with an end-to-end confidentiality and integrity protection and solving the problem in the related art that the data storage security in the cloud storage system is relatively poor.

As shown in FIG. 5, the embodiment of the present invention further provides a device for downloading files from a cloud storage device, comprising:
A downloading module 501, configured to receive a secure data file sent by the cloud storage system based on a downloading request;
A second generating module 502, configured to generate a file key;
A second processing module 503, configured to perform a security analysis processing on the secure data file based on the file key.

Wherein, in the downloading device, the downloading module 501 is further configured to: receive related file information sent by the cloud storage system based on the downloading request.

Furthermore, the abovementioned second generating module 502 is configured to: generate the file key based on the pre-generated user key and at least the file information, for example, generate the file key based on the pre-generated user key and the file information, as well as the obtained user information, the current time, and the random information generated by the client end itself.

The second process module 503 is configured to: decrypt some or all of the content of the secure data file, and/or perform an integrity protection verification processing on the secure data file. Wherein, the key used for decrypting part or all the content of the secure data file and the key used for performing the integrity protection verification processing on the secure data file may be different keys.

The device for downloading files from a cloud storage in accordance with the embodiment of the present invention provides users with an end-to-end confidentiality and integrity protection and solves the problem in the related art that the data storage security in the cloud storage system is relatively poor.

It should be noted that the device for downloading files from the cloud storage system is a device corresponding to the abovementioned downloading method, wherein all implementations in the downloading method embodiments are suitable for the downloading device embodiments to achieve the similar technical effect.

The above description is preferred embodiments of the present invention, and it should be noted that, for those ordinary skilled in the art, a number of improvements and modifications can also be made without departing from the principles of the present invention, and these improvements and modifications should also be considered as in the protection scope of the present invention.

### Industrial Applicability

With the method for uploading files to cloud storage system in accordance with the embodiment of the present invention, when a user uploads a data file at the client end, firstly a file key is generated, and then a security processing is performed on the original data file based on the file key and a secure data file is generated, and then the secure data file is sent to the cloud storage system for storage. It provides an end-to-end confidentiality and integrity protection for data stored by the user in the cloud storage and solves the problem in the related art that the data storage security in the cloud storage system is relatively poor. Therefore the present invention has strong industrial applicability.

## Claims

1. A method for uploading files to a cloud storage system, applied to a client end, and comprising:
generating a file key;
performing a security processing on an original data file according to the file key and generating a secure data file;
sending the secure data file to a cloud storage system.

2. The method for uploading files to a cloud storage system of claim 1, wherein, the step of generating a file key comprises:
generating the file key based on a pre-generated user key and file information.

3. The method for uploading files to a cloud storage system of claim 2, wherein, the file information comprises: a file name, a file identifier and a last modification time extracted from the original data file.

4. The method for uploading files to a cloud storage system of claim I, wherein, the step of performing a security processing on an original data file according to the file key and generating a secure data file comprises:
encrypting part or all of content of the original data file, and/or performing an integrity protection processing on the original data file.

5. The method for uploading files to a cloud storage system of claim 4, wherein,
an encryption key used for encrypting part or all of the content of the original data file is: the file key or a first derived key derived based on the file key;
a key used for performing an integrity protection processing on the original data file is: the file key, or a second derived key derived based on the file key.

6. The method for uploading files to a cloud storage system of claim 1, further comprising:
sending information for generating the file key, except of the user key, to the cloud storage system.

7. A method for downloading files from a cloud storage system, comprising:
receiving a secure data file sent by a cloud storage system based on a downloading request;
generating a file key;
performing a security analysis processing on the secure data file based on the file key.

8. The method for downloading files from a cloud storage system of claim 7, further comprising:
receiving related file information sent by the cloud storage system based on the downloading request.

9. The method for downloading files from a cloud storage system of claim 8, wherein, the related file information comprises: a secure metadata file.

10. The method for downloading files from a cloud storage system of claim 9, wherein, the secure metadata file comprises one or more of a file identifier, a file owner identifier, a file name, a last modification time, a security processing time, random information, a security parameter and an access control list.

11. The method for downloading files from a cloud storage system of claim 7, wherein, the step of performing a security analysis processing on the secure data file based on the file key comprises:
decrypting some or all of content of the secure data file, and/or performing an integrity protection verification processing on the secure data file.

12. A device for uploading files to a cloud storage system, applied to a client end, and comprising a first generating module, a first processing module and an uploading module, wherein:
the first generating module is configured to: generate a file key;
the first processing module is configured to: perform a security processing on an original data file based on the file key and generate a secure data file;
the uploading module is configured to: send the secure data file to a cloud storage system.

13. A device for downloading files from a cloud storage system, comprising a downloading module, a second generating module and a second processing module, wherein:
the downloading module is configured to: receive a secure data file sent by a cloud storage system based on a downloading request;
the second generating module is configured to: generate a file key;
the second processing module is configured to: perform a security analysis processing on the secure data file based on the file key.
